# EUROPEAN PATENT SPECIFICATION

(11) **EP 2 473 304 B1**
(45) Date of publication and mention of the grant of the patent: **24.01.2018**
(21) Application number: 10766123.3
(22) Date of filing: 16.08.2010
(51) Int. Cl.: B23C 5/10, B23P 15/34

(54) **ROTARY CUTTING TOOL HAVING A CUTTING EDGE FORMED OF VEINED PCD**
DREHSCHNEIDEWERKZEUG MIT EINER AUS GEHÄRTETEM PCD GEFORMTEN SCHNEIDEKANTE
OUTIL DE COUPE ROTATIF COMPRENANT UN BORD DE COUPE FORMÉ DE PCD NERVURÉ

(30) Priority: 03.09.2009 IL 20074209
(43) Date of publication of application: 11.07.2012
(73) Proprietor: KENNAMETAL INC., Latrobe, PA 15650 (US)
(72) Inventor: VOLOKH, Vladimir, Maalot 24952 (IL); SHARIVKER, Leonid, Naharia 22403 (IL)
(74) Representative: Prinz & Partner mbB
(86) International application number: PCT/IL2010/000702
(87) International publication number: WO 2011/027341

(56) References cited:
- WO-A2-2008/018062
- JP-A- 2000 296 409
- US-A- 5 115 697
- US-A1- 2001 024 602
- US-A1- 2002 031 409

## Description

The present invention relates to rotary cutting tools, more particularly to rotary cutting tools with veined polycrystalline diamond cutting edges, a blank and a method used in manufacturing the same. U.S. Pat. 5,115,697 discloses a rotary cutting tool, a blank and a method according to the preambles of claims 1, 8 and 12 respectively. It is known in the art of cutting tools to employ cutting edges made of polycrystalline diamond (PCD) or cubic boron nitride (CBN), compacted and sintered to a tungsten carbide (TC) blank. For brevity, PCD and CBN or other diamond like materials will be defined herein below by the term PCD.

U.S. Pat. 5,070,748 to Packer, describes the process of forming such a rotary cutter by forming a rotary cutter blank of cemented tungsten carbide; forming at least a pair of longitudinally extending grooves in an outside surface of the blank; filling the grooves with diamond-like material; bonding the diamond-like material in the grooves in the rotary cutter blank at a sufficient heat and pressure to form polycrystalline diamond-like material; forming longitudinally extending flutes in the rotary cutter blank along a leading edge of the polycrystalline diamond-like material; and forming a cutting edge along a leading edge of the polycrystalline diamond-like material.

In order to minimize PCD removal during the last step of forming a cutting edge along the leading edge of the PCD material, a modified PCD rotary cutter is suggested in U.S. Pat. 5,115,697 to Rodriguez, describing a veined PCD cutter wherein the grooves formed in the blank are radially oriented substantially at an angle that conforms to the angle of concave flutes that are subsequently formed adjacent the grooves in the rotary cutter blank . The cutter blank is subsequently machined to form the flutes and a cutting edge along an angled leading edge formed by the sintered diamond material.

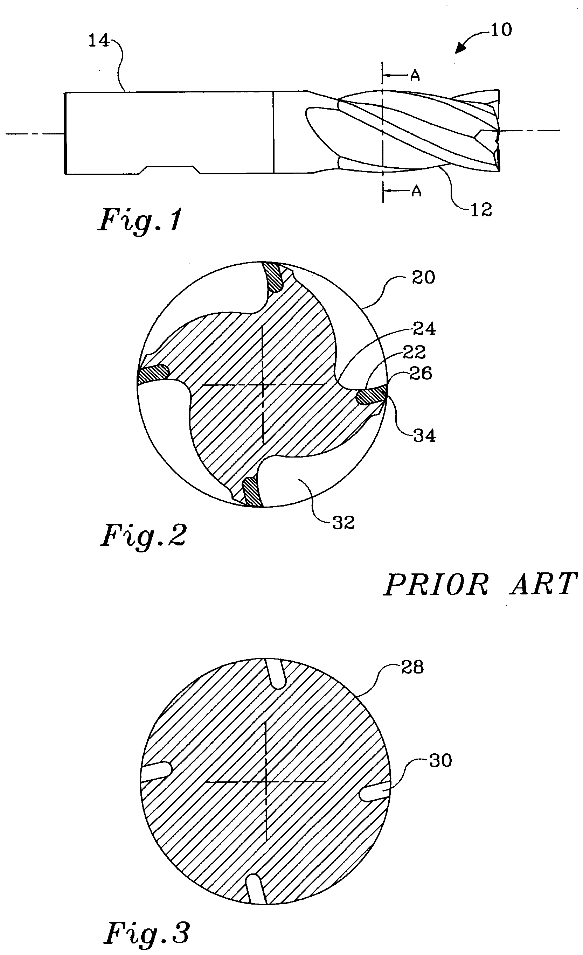

Figs. 1 to 3 show different views of a standard prior art rotary cutter in the form of a helical teeth cylindrical endmill 10, normally provided with a tooth face 22 having positive radial rake angle.

Fig. 1 shows a front view of a standard cylindrical four flute endmill 10, with helical teeth 12 and straight shank 14. Line A-A represents a cutting plane perpendicular to the center axis of the endmill 10. Figs. 2 to 11 depict an enlarged cross-sectional view of different veined PCD rotary cutters at different production stages all taken along same cutting plane represented by line A-A in Fig 1.

Referring to Fig. 2, there is shown a PCD endmill 20 made with tooth face 22 in the form of a single concave curve extending without break from the tooth root 24 to the cutting edge 26. The PCD endmill 20 is produced in accordance with known methods such as described above in U.S. Pat. 5,115,697. The TC blank 28 (Fig. 3), corresponding to the PCD endmill 20 of Fig. 2, is formed with grooves 30, radially oriented at an angle that conforms to the angle of the concave tooth face 22 (Fig. 2). PCD veins are compacted and sintered in grooves 30, and the cutter blank is subsequently machined to form the flutes 32 and cutting edges 26 along the angled leading face formed by the sintered PCD veins. The finished cutter is shown in Fig. 2, with the exposed PCD layer 34.

A disadvantage of this tooth form is that there occurs extensive rubbing of the chip against the tooth face, resulting in high power consumption, and undesired heating of the cutting tool. Another problem is that chips adhere to the tooth face and do not clear easily out of the space between the milling cutter teeth.

As a solution, with relation to rotary cutters made of solid TC or high speed steel (HSS), it is suggested in U.S. Pat. 7,393,160 to the present applicant, to improve the rake face geometry, by providing a rotary multi-tooth milling cutter, each tooth having a tooth face comprising at least two sections, the first section nearest the cutting edge having a convex form as viewed in a cross section perpendicular to the cutter axis. Alternatively, the milling cutter may be further provided with a concave chip-breaking section located between the first and second sections.

However, the above solution cannot be implemented directly to PCD cutting tools, as described earlier, since, following the flute grinding step which exposes the flat face of the PCD material, heavy PCD removal is still necessitated when forming the convex or combined convex-concave shape of the tooth face. By nature, PCD is hard to grind and additional electric discharge machining (EDM) is involved before final grinding of the cutting edge can take place. Furthermore, due to removal of PCD material, the resulting cutting edge will be considerably weakened.

US 5,115,697 discloses a diamond edge cutting tool comprising at least a pair of grooves containing sintered diamond, where the grooves are provided in the shank of the tool adjacent the concave flutes. The cutting tool is formed by a blank having grooves in side walls, where the grooves are oriented substantially at an angle to conform with the angle of the cutting face of the tool. The cutting surface adjacent the cutting edge is straight forms a straight line.

Consequently a new approach is required to improve the energy and chip disposal properties of PCD cutting tools, as already implemented in solid HSS and TC tools, in particular for machining materials that are hard to cut such as composite plastics reinforced with fibers of glass, carbon, boron or Kevlar.

### SUMMARY OF THE INVENTION

It is thus one object of the present invention to provide a modified tooth face geometry for PCD rotary cutters. It is another object, to provide a corresponding production blank that facilitates minimal PCD removal.

According to the present invention, a rotary cutting tool is provided as defined In claim 1. The rotary cutting tool, made of a blank, has at least one tooth comprising a root and a cutting edge, the cutting edge being formed of veined PCD, wherein:
the tooth face as viewed in a cross-section perpendicular to an axis of the cutting tool includes a first curved surface proximate the cutting edge, and a second curved surface proximate the tooth root and the first curved surface.

According to the present invention, a blank is also provided as defined in claim 8, and a method as defined in claim 12. At least one groove is provided in the blank, which has a curved leading surface that corresponds in shape to the first curved surface of the respective tooth.

### BRIEF DESCRIPTION OF THE DRAWINGS

In order to understand the invention and to see how it may be carried out in practice, embodiments will now be described, by way of non-limiting example only, with reference to the accompanying drawings, in which:
Fig. 1 is a front view of a standard prior art endmill;
Fig. 2 is an enlarged cross-sectional view taken along line A-A in Fig 1, of a prior art PCD endmill;
Fig. 3 is a schematic sectional view of the endmill of Fig. 2, demonstrating a production step;
Fig. 4 is a cross-sectional view of an endmill made in accordance with a first embodiment of the present invention;
Fig. 5 is a schematic sectional view of the endmill of Fig. 4, demonstrating a production step;
Fig. 6 is a cross-sectional view of an endmill made in accordance with a second embodiment of the present invention;
Fig. 7 is a schematic sectional view of the endmill of Fig. 6, demonstrating a production step;
Fig. 8 is a cross-sectional view of an endmill made in accordance with a third embodiment of the present invention;
Fig. 9 is a schematic sectional view of the endmill of Fig. 8, demonstrating a production step;
Fig. 10 is a cross-sectional view of an endmill made in accordance with a fourth embodiment of the present invention; and
Fig. 11 is a schematic sectional view of the endmill of Fig. 10, demonstrating a production step.

### DETAILED DESCRIPTION OF EMBODIMENTS

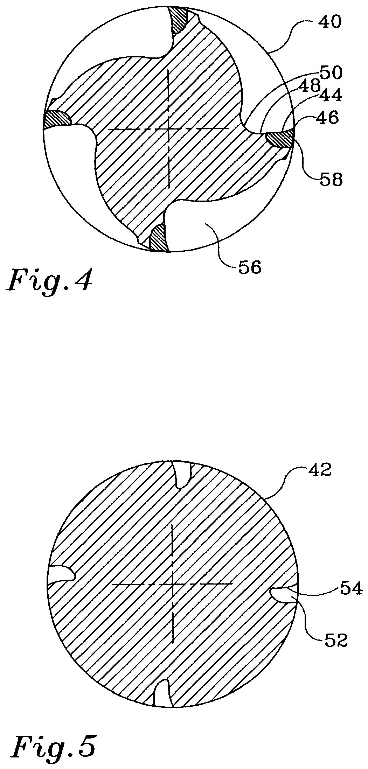

Figs. 4 to 11 depict an enlarged cross-sectional view of a veined PCD rotary cutter according to the embodiments showing different production stages all taken along same cutting plane represented by line A-A in Fig 1.

Referring to Figs. 4 and 5, there are shown a four flute PCD rotary cutter 40 and corresponding blank 42 made in accordance with a first embodiment of the present invention. The tooth face, as viewed in a cross-section perpendicular to the cutter axis, is divided into two sections: a first concave section 44 (constituting a first curved surface) proximate the cutting edge 46, and a second concave section 48 (constituting a second curved surface) proximate the tooth root 50 and abutting the first section 44. The TC blank 42 is provided with grooves 52 formed with a leading face 54 corresponding to the shape of the first concave section 44 of the cutter 40. In some embodiments, the first concave section 44 is smaller than the second concave section 48.

Subsequent to compacting and sintering of PCD veins in grooves 52, the flutes 56 are formed by a standard grinding operation. The first concave section 44 of the PCD veins is exposed with close tolerance to final shape, and minimal EDM operation is required to remove residual traces of TC raw material before final grinding of the cutting edge 46 is performed. Full thickness and strength of the PCD layer 58 is maintained.

During operation of the cutting tool, workpiece chips are evacuated by the first concave section 44 and cleared away from the second concave section 48, thus significantly reducing adhesion of chips to the cutter and excessive heat.

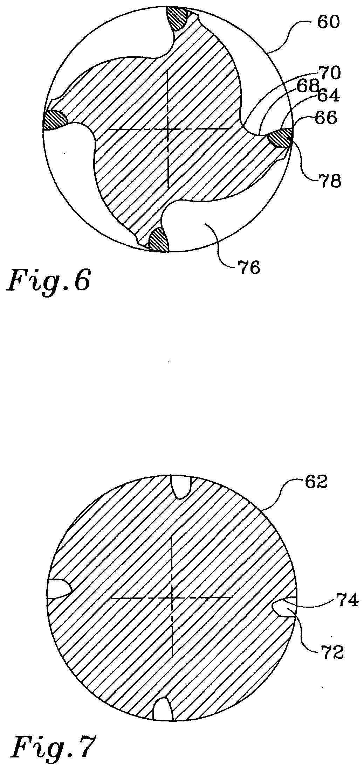

With reference to Figs. 6 and 7, there is shown a four flute PCD rotary cutter 60 and corresponding TC blank 62 made in accordance with a second embodiment of the present invention. The tooth face, as viewed in cross-section perpendicular to the cutter axis, is divided into two sections, a first convex section 64 (constituting a first curved surface) proximate the cutting edge 66, and a second concave section 68 (constituting a second curved surface) proximate the tooth root 70 and abutting the first section 44. The blank 62 is provided with grooves 72 formed with leading face 74 corresponding to the final convex shape of the first convex section 64 of the cutter 60. In some embodiments, the first convex section 64 is smaller than the second concave section 68.

Subsequent to compacting and sintering of PCD veins in grooves 72, the flutes 76 are formed by a standard grinding operation. The first convex section 64 of the PCD veins is exposed with close tolerance to final shape, and minimal EDM operation is required to remove residual traces of TC raw material before final grinding of the cutting edge 66 is performed. Full thickness and strength of the PCD layer 78 is maintained.

During operation of the cutting tool, workpiece chips are evacuated by the first convex section 64 and cleared away from the second concave section 68, thus significantly reducing adhesion of chips to the cutter and excessive heat.

Choosing between rotary cutters made according to the first or second embodiments of the present invention is determined by several factors including the workpiece material, cutting speeds, availability of coolant and other working conditions familiar to the person skilled in the art.

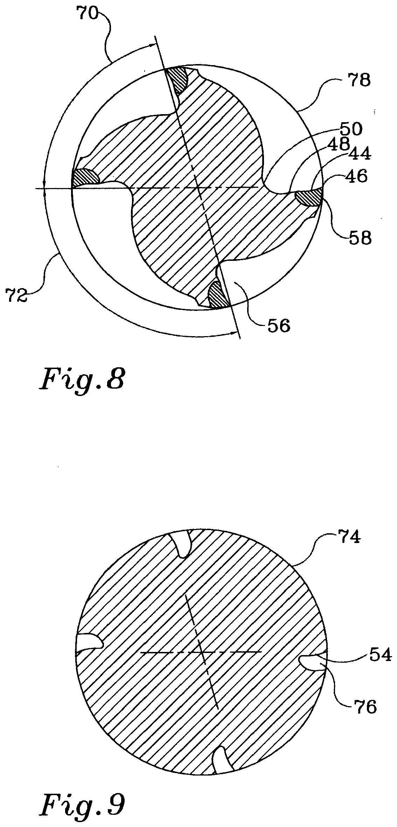

In a third embodiment of the present invention, as shown in Figs. 8 and 9, the tooth face is identical in shape to the tooth face of the first embodiment of the present invention and the same reference numerals are used in relation to tooth shape. However, uneven flute spacing on the cutter perimeter, shown by the different angles 70, 72 included between adjacent cutting edges, provides better balance and less chatter. This uneven spacing prevents regular flute impacts from creating harmonic vibration. The blank 74 is provided with grooves 76 formed with the same uneven spacing corresponding to the flute spacing of the final cutter 78.

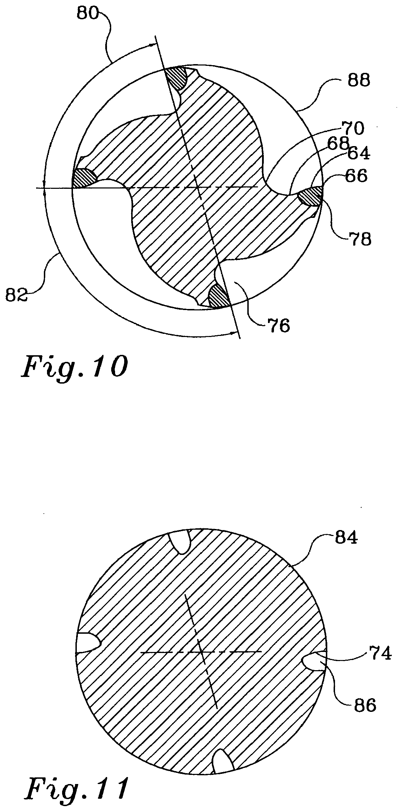

In a fourth embodiment of the present invention, as shown in Figs. 10 and 11, the tooth face is identical in shape to the tooth face of the second embodiment and the same reference numerals are used in relation to tooth shape. Here again, uneven flute spacing on the cutter perimeter shown by the different angles 80, 82 included between adjacent cutting edges, provides better balance and less chatter. This uneven spacing prevents regular flute impacts from creating harmonic vibration. The blank 84 is provided with grooves 86 formed with the same uneven spacing corresponding to the flute spacing of the final cutter 88. While the invention has been described with reference to a four flute cylindrical endmill, it is applicable to other rotary cutters with one, two, three, five or any number of flutes evenly or unevenly spaced on the perimeter circle, as well as other cutter shapes such as disk, conical or spherical shapes.

## Claims

1. A rotary cutting tool (40), formed from a blank (42), having at least one tooth (58) comprising a root (50) and a cutting edge (46), the cutting edge being formed of veined PCD, wherein:
the tooth face as viewed in a cross-section perpendicular to an axis of the cutting tool includes a first surface (44, 64) proximate the cutting edge, and a second curved surface (48, 68) proximate the root (50) and the first surface, and
the first surface (44, 64) adjacent the cutting edge having been formed in a respective groove (52) of the blank (42),
**characterized in that** the first surface adjacent the cutting edge is a curved first surface (44, 64) and is formed of veined PCD, the respective groove (52) of the blank having a leading face corresponding to the shape of the curved first surface such that the veined PCD, when exposed by forming the flutes in the blank, corresponds with close tolerances to final shape.

2. The cutting tool according to claim 1, wherein the first curved surface (44) is concave and the second curved surface (48) is concave.

3. The cutting tool according to claim 1, wherein said first curved surface (64) is convex in shape and said second curved surface (68) is concave in shape.

4. The cutting tool according to any one of claims 1 to 3, wherein the first curved surface is of smaller width than the second curved surface.

5. The cutting tool according to any one of claims 1 to 4, comprising a plurality of cutting edges evenly spaced apart on a perimeter circle of the cutting tool, said blank having an equal plurality of grooves such that a mutual separation between adjacent grooves (52) corresponds to a flute spacing of the cutting tool.

6. The cutting tool according to any one of claims 1 to 4, comprising a plurality of cutting edges unevenly spaced apart on a perimeter circle of the cutting tool, said blank having an equal plurality of grooves (52) such that a mutual separation between adjacent grooves corresponds to a flute spacing of the cutting tool.

7. The cutting tool according to any one of claims 1 to 6, wherein an outer shape of the cutting tool body is selected from the group of: cylindrical, conical and spherical.

8. A blank for forming a rotary cutting tool (40) having at least one tooth (58) comprising a root (50) and a cutting edge (46), the cutting edge being formed of veined PCD, wherein:
the tooth face of the rotary cutting too (40) as viewed in a cross-section perpendicular to an axis of the cutting tool includes a first surface (44, 64) proximate the cutting edge, and a second curved surface (48, 68) proximate the root (50) and the first surface, and
the first surface (44, 64) adjacent the cutting edge having been formed in a respective groove (52) of the blank (42), **characterised in that** the first surface adjacent the cutting edge is a curved first surface (44, 64) and is formed of veined PCD,
the blank comprising at least one groove (52) having a curved leading surface (54) that corresponds in shape to the first curved surface (44, 46) of the cutting tool.

9. The blank according to claim 8, wherein the at least one groove comprises a plurality of equally spaced grooves (52) corresponding to a flute spacing of the cutting tool.

10. The blank according to claim 8, wherein the at least one groove comprises a plurality of unequally spaced grooves (52) corresponding to a flute spacing of the cutting tool.

11. The blank according to claim 8, wherein the blank is formed of tungsten carbide.

12. A method for forming a rotary cutting tool (40) having at least one tooth (58) comprising a root (50) and a cutting edge (46), the cutting edge being formed of veined PCD, the tooth face as viewed in a cross-section perpendicular to an axis of the cutting tool includes a first surface (44, 64) proximate the cutting edge, and a second curved surface (48, 68) proximate the root (50) and the first surface, the first surface (44, 64) adjacent the cutting edge having been formed in a respective groove (52) of the blank (42), **characterised by** the first surface adjacent the cutting edge being a curved first surface (44, 64) arid being formed of veined PCD, and in that:
- a blank (42) is provided which comprises at least one groove (52) having a curved leading surface (54) that corresponds in shape to the first curved surface (44, 46) of the cutting tool,
- PCD veins being compacted and sintered in the groove (52),
- flutes (56) are formed in a grinding operation, thereby exposing the leading face of the PCD veins with close tolerance to final shape and minimizing EDM operation for removing residual traces of TC raw material before final grinding of the cutting edge is performed.

## Patentansprüche

1. Rotationsschneidwerkzeug (40), gebildet aus einem Rohling (42), der mindestens einen Zahn (58) aufweist, umfassend eine Wurzel (50) und eine Schneidkante (46), wobei die Schneidkante aus geädertem PKD gebildet ist, wobei:
die Zahnfläche bei Betrachtung in einem Querschnitt senkrecht zu einer Achse des Schneidwerkzeugs eine erste Oberfläche (44, 64) proximal zur Schneidkante und eine zweite gekrümmte Oberfläche (48, 68) proximal zur Wurzel (50) und der ersten Oberfläche aufweist und
die erste Oberfläche (44, 64) benachbart der Schneidkante in einer jeweiligen Rille (52) des Rohlings (42) gebildet ist,
**dadurch gekennzeichnet, dass** die erste, der Schneidkante benachbarte Oberfläche eine gekrümmte erste Oberfläche (44, 64) ist und aus geädertem PKD gebildet ist, wobei die jeweilige Rille (52) des Rohlings eine führende Fläche entsprechend der Form der gekrümmten ersten Oberfläche aufweist, so dass der geäderte PKD, wenn er durch Bilden der Spannuten in dem Rohling freigelegt wird, mit geringen Toleranzen der fertigen Form entspricht.

2. Schneidwerkzeug nach Anspruch 1, wobei die erste gekrümmte Oberfläche (44) konkav ist und die zweite gekrümmte Oberfläche (48) konkav ist.

3. Schneidwerkzeug nach Anspruch 1, wobei die erste gekrümmte Oberfläche (64) konvex in der Form ist und die zweite gekrümmte Oberfläche (68) konkav in der Form ist.

4. Schneidwerkzeug nach einem der Ansprüche 1 bis 3, wobei die erste gekrümmte Oberfläche von kleinerer Breite ist als die zweite gekrümmte Oberfläche.

5. Schneidwerkzeug nach einem der Ansprüche 1 bis 4, umfassend eine Vielzahl von Schneidkanten, die auf einem Umfangskreis des Schneidwerkzeugs gleichmäßig beabstandet sind, wobei der Rohling eine gleiche Vielzahl von Rillen aufweist, so dass eine gegenseitige Trennung zwischen benachbarten Rillen (52) einem Spannutenabstand des Schneidwerkzeugs entspricht.

6. Schneidwerkzeug nach einem der Ansprüche 1 bis 4, umfassend eine Vielzahl von Schneidkanten, die auf einem Umfangskreis des Schneidwerkzeugs ungleichmäßig beabstandet sind, wobei der Rohling eine gleiche Vielzahl von Rillen (52) aufweist, so dass eine gegenseitige Trennung zwischen benachbarten Rillen einem Spannutenabstand des Schneidwerkzeugs entspricht.

7. Schneidwerkzeug nach einem der Ansprüche 1 bis 6, wobei eine äußere Form des Schneidwerkzeugkörpers ausgewählt ist aus der Gruppe von: zylindrisch, kegelförmig und kugelförmig.

8. Rohling zum Bilden eines Rotationsschneidwerkzeugs (40), mindestens einen Zahn (58) aaufweisend, umfassend eine Wurzel (50) und eine Schneidkante (46), wobei die Schneidkante aus geädertem PKD gebildet ist, wobei:
die Zahnfläche des Rotationsschneidwerkzeugs (40) bei Betrachtung in einem Querschnitt senkrecht zu einer Achse des Schneidwerkzeugs eine erste Oberfläche (44, 64) proximal zur Schneidkante und eine zweite gekrümmte Oberfläche (48, 68) proximal zur Wurzel (50) und der ersten Oberfläche einschließt und
die erste Oberfläche (44, 64) benachbart der Schneidkante in einer jeweiligen Rille (52) des Rohlings (42) gebildet ist,
**dadurch gekennzeichnet, dass**
die erste Oberfläche benachbart der Schneidkante eine gekrümmte erste Oberfläche (44, 64) ist und aus geädertem PKD gebildet ist,
wobei der Rohling mindestens eine Rille (52) mit einer gekrümmten führenden Oberfläche (54) umfasst, die in der Form der ersten gekrümmten Oberfläche (44, 46) des Schneidwerkzeugs entspricht.

9. Rohling nach Anspruch 8, wobei die mindestens eine Rille eine Vielzahl von gleichmäßig beabstandeten Rillen (52) umfasst, die einem Spannutenabstand des Schneidwerkzeugs entsprechen.

10. Rohling nach Anspruch 8, wobei die mindestens eine Rille eine Vielzahl von ungleichmäßig beabstandeten Rillen (52) umfasst, die einem Spannutenabstand des Schneidwerkzeugs entsprechen.

11. Rohling nach Anspruch 8, wobei der Rohling aus Wolframcarbid gebildet ist.

12. Verfahren zum Bilden eines Rotationsschneidwerkzeugs (40) mit mindestens einem Zahn (58), umfassend eine Wurzel (50) und eine Schneidkante (46), wobei die Schneidkante aus geädertem PKD gebildet ist, wobei die Zahnfläche bei Betrachtung in einem Querschnitt senkrecht zu einer Achse des Schneidwerkzeugs eine erste Oberfläche (44, 64) proximal zur Schneidkante und eine zweite gekrümmte Oberfläche (48, 68) proximal zur Wurzel (50) und der ersten Oberfläche aufweist, wobei die erste Oberfläche (44, 64) nahe der Schneidkante in einer jeweiligen Rille (52) des Rohlings (42) gebildet wurde, **dadurch gekennzeichnet, dass** die erste Oberfläche benachbart der Schneidkante eine gekrümmte erste Oberfläche (44, 64) ist und aus geädertem PKD gebildet ist, und dadurch, dass:
- ein Rohling (42) bereitgestellt wird, der mindestens eine Rille (52) mit einer gekrümmten führenden Oberfläche (54) umfasst, die in der Form der ersten gekrümmten Oberfläche (44, 46) des Schneidwerkzeugs entspricht,
- PKD-Adern in der Rille (52) komprimiert und gesintert werden,
- Spannuten (56) in einem Schleifvorgang gebildet werden, wobei die führende Fläche der PKD-Adern mit geringer Toleranz zur fertigen Form freigelegt wird und der EDM-Vorgang zum Entfernen verbleibender Spuren von TC-Rohmaterial vor dem letztendlichen Schleifen der Schneidkante minimiert wird.

## Revendications

1. Outil de coupe rotatif (40), formé à partir d'une ébauche (42), ayant au moins une dent (58) comprenant une racine (50) et un bord de coupe (46), le bord de coupe étant formé de diamant polycristallin (PCD) nervuré, dans lequel :
la face de dent telle que visualisée dans une coupe transversale perpendiculaire à un axe de l'outil de coupe inclut une première surface (44, 64) à proximité du bord de coupe, et une deuxième surface courbée (48, 68) à proximité de la racine (50) et de la première surface, et
la première surface (44, 64) adjacente au bord de coupe ayant été formée dans une rainure respective (52) de l'ébauche (42),
**caractérisé en ce que** la première surface adjacente au bord de coupe est une première surface courbée (44, 64) et est formée de PCD nervuré, la rainure respective (52) de l'ébauche ayant une face d'attaque correspondant à la forme de la première surface courbée de telle sorte que le PCD nervuré, lorsqu'il est exposé en formant les cannelures dans l'ébauche, correspond avec des tolérances étroites à la forme finale.

2. Outil de coupe selon la revendication 1, dans lequel la première surface courbée (44) est concave et la deuxième surface courbée (48) est concave.

3. Outil de coupe selon la revendication 1, dans lequel ladite première surface courbée (64) est de forme convexe et ladite deuxième surface courbée (68) est de forme concave.

4. Outil de coupe selon l'une quelconque des revendications 1 à 3, dans lequel la première surface courbée est de plus petite largeur que la deuxième surface courbée.

5. Outil de coupe selon l'une quelconque des revendications 1 à 4, comprenant une pluralité de bords de coupe espacés uniformément sur un cercle périmétrique de l'outil de coupe, ladite ébauche ayant une pluralité égale de rainures de telle sorte qu'une séparation mutuelle entre des rainures adjacentes (52) correspond à un espacement de cannelures de l'outil de coupe.

6. Outil de coupe selon l'une quelconque des revendications 1 à 4, comprenant une pluralité de bords de coupe espacés de façon non uniforme sur un cercle périmétrique de l'outil de coupe, ladite ébauche ayant une pluralité égale de rainures (52) de telle sorte qu'une séparation mutuelle entre des rainures adjacentes correspond à un espacement de cannelures de l'outil de coupe.

7. Outil de coupe selon l'une quelconque des revendications 1 à 6, dans lequel une forme externe du corps d'outil de coupe est choisie dans le groupe de : cylindrique, conique et sphérique.

8. Ébauche pour former un outil de coupe rotatif (40) ayant au moins une dent (58) comprenant une racine (50) et un bord de coupe (46), le bord de coupe étant formé de PCD nervuré, dans laquelle :
la face de dent de l'outil de coupe rotatif (40), telle que visualisée dans une coupe transversale perpendiculaire à un axe de l'outil de coupe, inclut une première surface (44, 64) à proximité du bord de coupe, et une deuxième surface courbée (48, 68) à proximité de la racine (50) et de la première surface, et
la première surface (44, 64) adjacente au bord de coupe ayant été formée dans une rainure respective (52) de l'ébauche (42),
**caractérisée en ce que**
la première surface adjacente au bord de coupe est une première surface courbée (44, 64) et est formée de PCD nervuré,
l'ébauche comprenant au moins une rainure (52) ayant une surface d'attaque courbée (54) dont la forme correspond à la première surface courbée (44, 46) de l'outil de coupe.

9. Ébauche selon la revendication 8, dans laquelle ladite au moins une rainure comprend une pluralité de rainures espacées de manière égale (52) correspondant à un espacement de cannelures de l'outil de coupe.

10. Ébauche selon la revendication 8, dans laquelle ladite au moins une rainure comprend une pluralité de rainures espacées de manière inégale (52) correspondant à un espacement de cannelures de l'outil de coupe.

11. Ébauche selon la revendication 8, où l'ébauche est formée de carbure de tungstène.

12. Procédé de formation d'un outil de coupe rotatif (40) ayant au moins une dent (58) comprenant une racine (50) et un bord de coupe (46), le bord de coupe étant formé de PCD nervuré, la face de dent telle que visualisée dans une coupe transversale perpendiculaire à l'axe de l'outil de coupe inclut une première surface (44, 64) à proximité du bord de coupe, et une deuxième surface courbée (48, 68) à proximité de la racine (50) et de la première surface, la première surface (44, 64) adjacente au bord de coupe ayant étant formée dans une rainure respective (52) de l'ébauche (42), **caractérisé par** la première surface adjacente au bord de coupe étant une première surface courbée (44, 64) et étant formée de PCD nervuré, et en ce que :
- une ébauche (42) est fournie, laquelle comprend au moins une rainure (52) ayant une surface d'attaque courbée (54) dont la forme correspond à la première surface courbée (44, 46) de l'outil de coupe,
- des veines de PCD étant compactées et frittées dans la rainure (52),
- des cannelures (56) sont formées dans une opération de meulage, ce qui expose la face d'attaque des veines de PCD avec une tolérance étroite à la forme finale et minimise l'opération d'usinage par électroérosion pour retirer des traces résiduelles de matériau de départ en carbure de tungstène (TC) avant que le meulage final du bord de coupe soit effectué.
